# EUROPÄISCHE PATENTSCHRIFT

(11) **EP 3 770 488 B1**
(45) Veröffentlichungstag und Bekanntmachung des Hinweises auf die Patenterteilung: **24.01.2024**
(21) Anmeldenummer: 20187615.8
(22) Anmeldetag: 24.07.2020
(51) Int. Cl.: F21S 8/08, G08G 1/0967, G08G 1/16, B60Q 1/08, F21V 23/04, F21W 131/103

(54) **STRASSENLEUCHTE MIT KOMMUNIKATIONSSCHNITTSTELLE ZU FAHRZEUGEN**
STREET LAMP WITH COMMUNICATION INTERFACE FOR VEHICLES
LUMINAIRE D'ÉCLAIRAGE PUBLIC POURVU D'INTERFACE DE COMMUNICATION POUR VÉHICULES

(30) Priorität: 26.07.2019 DE 102019120275
(43) Veröffentlichungstag der Anmeldung: 27.01.2021
(73) Patentinhaber: Siteco GmbH, 83301 Traunreut (DE)
(72) Erfinder: Schroll, Katrin, 83301 Matzing (DE); Wuppinger, Bernhard, 83362 Surberg (DE); Wimmer, Kilian, 83362 Surberg (DE)
(74) Vertreter: Schmidt, Steffen

(56) Entgegenhaltungen:
- EP-A1- 2 752 832
- EP-A2- 3 228 499
- WO-A1-91/09253
- DE-A1-102012 206 691
- DE-A1-102016 212 187
- DE-U1-202013 007 713
- US-A1- 2019 197 883

## Beschreibung

Die vorliegende Erfindung betrifft eine Straßenleuchte, die mit einer Kommunikationsschnittstelle zu Fahrzeugen ausgerüstet ist.

Im Stand der Technik wird aktuell versucht, eine elektronische Datenkommunikation zwischen Fahrzeugen, auch Car-to-Car-Kommunikation oder kurz Car2Car genannt, zu verbessern. Als Car-to-Car-Kommunikation bezeichnet man den Austausch von Informationen und Daten zwischen Kraftfahrzeugen, um den Fahrern vorzeitig kritische und gefährliche Situationen zu melden. Ziel ist es dabei, die Sicherheit im Verkehr zu erhöhen sowie die Verkehrsflüsse zu optimieren.

Car2Car ist ein Spezialfall eines noch allgemeineren Konzepts, welches generell die Kommunikation von Fahrzeugen mit der Umgebung vorsieht (auch als Car2X bezeichnet). Dabei ist auch die Kommunikation mit Infrastruktur vorgesehen.

Ein Problem bei der Durchsetzung der Technologie besteht jedoch darin, dass zunächst eine Vielzahl von Verkehrsteilnehmern mit entsprechenden Kommunikationsmitteln ausgerüstet sein muss, bevor jeder einzelne der Verkehrsteilnehmer auch einen Vorteil aus der Technologie gewinnt. Solange die Fahrzeuge nicht zur Kommunikation untereinander oder mit einer Infrastruktur in der Umgebung ausgerüstet sind, ist die Zahl der daraus erhältlichen Informationen sehr beschränkt, so dass die aus dem System gewonnen Daten zunächst noch nutzlos sind.

Die DE 10 2012 206 691 A1 offenbart eine Straßenleuchte gemäß dem Oberbegriff des Anspruchs 1.

Aufgabe der vorliegenden Erfindung ist es, eine Kommunikation für Fahrzeuge bereitzustellen, welche unmittelbar Vorteile für den Fahrzeugführer aus bereits vorhandener Infrastruktur bietet.

Gelöst wird die Aufgabe durch eine Straßenleuchte nach Anspruch 1 sowie durch ein Fahrzeug mit einer Kommunikationsschnittstelle nach Anspruch 13.

Ein besonderer Vorteil der Erfindung liegt in der Erkenntnis, dass die Informationsbereitstellung für Fahrzeuge durch Straßenleuchten erfolgen kann, die auch dafür eingerichtet sind, abhängig von der bidirektionalen Kommunikation zu Fahrzeugen die Lichtverteilung entsprechend den aus der Kommunikation gewonnen Informationen zu verändern. Eine Vielzahl von Anwendungen ist mit diesem System möglich. Beispielsweise kann die Lichtverteilung der Leuchte entsprechend dem Bewegungsmuster eines Fahrzeuges angepasst werden. Dies geht weit über die Möglichkeiten einer einfachen Präsenzdetektion einer Leuchte hinaus, weil die Kommunikation zum Fahrzeug über einen größeren Raumbereich erfolgen kann und die Kommunikation bereits Daten übertragen kann, aus denen für die Straßenleuchte erkennbar ist, welchem Bewegungsmuster das Fahrzeug folgt. Die für ein Fahrzeug optimierte Lichtverteilung kann dadurch auch abhängig von der Geschwindigkeit oder beispielsweise auch einer voraussichtlichen Fahrtrichtungsänderung des Fahrzeugs, z.B. aus Daten des fahrzeugeigenen Navigationssystems oder eines bereits gesetzten Fahrtrichtungsanzeigers des Fahrzeugs, erkannt werden. Ferner können Leuchten in verkehrsarmen Zeiten gedimmt werden. Die Leuchte kann jedoch auch die Funktion eines Fahrzeugscheinwerfers übernehmen, indem die Lichtverteilung der Leuchten zur Ausleuchtung der Straße in Bewegungsrichtung des Fahrzeugs erhöht wird. In diesem Fall ist die bidirektionale Kommunikation von besonderem Vorteil, weil von dem Fahrzeug Daten zur Leuchte übermittelt werden können, die bereits beabsichtige Richtungsänderungen enthalten.

Gemäß einer bevorzugten Ausführungsform ist die Leuchte mit wenigstens einem Sensor verbunden, der eingerichtet ist, um Umweltbedingungen, Präsenz von Personen und/oder Tieren, und/oder Bewegung von weiteren Fahrzeugen zu erfassen, und die Schnittstelle ist eingerichtet, um die erfassten Daten an das Fahrzeug im Erfassungsbereich der Straßenleuchte zu senden. In dieser Ausführungsform kann die Straßenleuchte zusätzlich zu den Daten aus dem Fahrzeug auch weitere Daten ermitteln, welche zur Anpassung der Lichtverteilung der Leuchte an die gegebenen Situation sinnvoll sind. Insbesondere kann die Beleuchtung an die Präsenz von Personen und dem Vorhandensein und dem Bewegungsmuster weiterer Fahrzeuge angepasst werden. Beispielsweise können Personen am Straßenrand gezielter beleuchtet werden oder Tiere können bei Gefahr eines Wildwechsels angeleuchtet werden, um die Aufmerksamkeit des Fahrers des sich nähernden Fahrzeuges auf die Person bzw. die weiteren Objekte zu erhöhen. Gleichzeitig kann über die bidirektionale Kommunikation dem Fahrer ein entsprechender Warnhinweis übermittelt werden. Im Falle von Wildtieren kann auch vorgesehen sein, durch eine gezielte Blendung der Tiere, diese vor einem Wechsel der Fahrbahn abzuhalten. Ferner kann bei bestimmten Umweltbedingungen, z.B. Nebel, die Beleuchtungsstärke sowie ggf. das Farbspektrum der Leuchte den Gegebenheiten angepasst werden.

Gemäß einer bevorzugten Ausführungsform ist die Leuchte dazu eingerichtet, wenigstens eine Umweltbedingung zu erfassen und die Steuereinrichtung ist dazu eingerichtet, eine Lichtfarbe oder eine Lichtverteilung in Abhängigkeit der erfassten Umweltbedingung zu verändern. In diesem Fall kann die Straßenleuchte ferner über die bidirektionale Kommunikation eine Nachricht an das Fahrzeug senden, um auf die detektierte Umweltbedingung, z.B. Eisglätte oder Aquaplaning, hinzuweisen.

Gemäß einer bevorzugten Ausführungsform ist der Sensor dafür eingerichtet, die Präsenz von Personen und/oder Tieren zu erfassen und die Steuereinrichtung ist dazu eingerichtet, eine Lichtverteilung und/oder eine Lichtfarbe in einem Bereich der erfassten Person und/oder des erfassten Tieres zu ändern, insbesondere einen Lichtstrom in Richtung zu der erfassten Person und/oder dem erfassten Tier zu erhöhen. Dadurch kann die Aufmerksamkeit des Fahrers auf am Rande der Straßen befindliche Personen und/oder Tiere erhöht werden. Diese Funktionalität kann aktiviert werden, sobald die Straßenleuchte über die Kommunikationsschnittstelle erfasst, dass sich ein Fahrzeug nähert.

Gemäß einer bevorzugten Ausführungsform ist die Steuereinrichtung eingerichtet, um einen Ultraviolettanteil des Lichtstroms in Richtung zu einer erfassten Person zu erhöhen. Durch Erhöhen des Ultraviolettanteils sind weiße Kleidungsstücke in der Nach besonders einfach zu erkennen, da sie Fluoreszenzlicht wiedergeben.

Gemäß einer bevorzugten Ausführungsform ist bei der Erfassung eines Tieres die Steuereinrichtung dazu eingerichtet, um einen Blauanteil eines Lichtstroms in Richtung zum Tier zu erhöhen. Viele Wildtiere reagieren stärker auf blaues Licht und werden durch das Aufblitzen von blauem Licht am Überqueren der Straße gehindert. Dadurch können Wildunfälle vermieden werden. Eine entsprechende Warnung kann direkt an das Fahrzeug übermittelt werden. Ferner kann diese Funktionalität in der Straßenleuchte erst aktiviert werden, wenn über die Kommunikationsschnittstelle ein sich näherndes Fahrzeug detektiert wird. Dies hat den Vorteil, dass sich das Wild nicht an das blaue Licht gewöhnt, wodurch der Effekt des Lichts auf das Wild verloren ginge.

Erfindungsgemäß ist die Leuchte dazu eingerichtet, einen Lichtstrom in einer Richtung, entlang derer sich ein Fahrzeug bewegt, zu erhöhen und eine Information an das Fahrzeug zu senden, aus der sich für das Fahrzeug eine Erhöhung des Lichtstrom entlang der Bewegungsrichtung des Fahrzeuges ergibt. Dies ist insbesondere im Rahmen der erhöhten Elektromobilität von Vorteil. Durch Erhöhung des von der Straßenleuchte abgegebenen Lichtstroms in Richtung der Fahrtrichtung des Fahrzeuges wird die fahrzeugseitige Beleuchtung wenigstens zum Teil ersetzt werden. Insbesondere um bei elektrisch angetriebenen Fahrzeugen eine Verringerung des Energieverbrauches zu erzielen, kann situationsbedingt der Fahrzeugscheinwerfer abgedimmt werden, wenn sichergestellt ist, dass eine Straßenleuchte dessen Beleuchtungsaufgabe übernimmt.

Gemäß einer bevorzugten Ausführungsform ist die Steuereinrichtung dafür eingerichtet, einen Lichtstrom in einem Raumwinkel, aus dem sich ein Fahrzeug der Straßenleuchte nähert, zu verringern. Durch diese Ausführungsform kann die Blendung eines Fahrzeuglenkers durch eine Straßenleuchte verringert werden.

Gemäß einer bevorzugten Ausführungsform weist die Straßenleuchte einen Sensor auf, welcher dafür eingerichtet ist, Information von wenigstens einem im Erfassungsbereich der Leuchte befindlichen Fahrzeug zu empfangen, und die Steuereinrichtung der Straßenleuchte ist dafür eingerichtet, ein Warnsignal an sich annähernde Fahrzeuge über ein ausgesandten Lichtstrom der Leuchte und/oder über die bidirektionale Datenschnittstelle zu senden auf Basis der empfangenen Informationen. Beispielsweise kann ein Straßenverkehrsfahrzeug innerhalb des Erfassungsbereichs der Leuchte eine Information über Bauarbeiten oder eine sonstige Straßenblockade, z.B. durch einen Unfall an die Leuchte senden und die Leuchte sendet auf Grundlage dieser Information ein Warnsignal entweder direkt an Fahrzeuge, welche ebenfalls über die erfindungsgemäße bidirektionale Kommunikationsschnittstelle verfügen und/oder die Leuchte gibt eine Warnung an sich annähernde Fahrzeuge durch ein verändertes Lichtbild, z.B. Zumischen eines gelben Blinklichtes, ab.

Gemäß einer bevorzugten Ausführungsform ist der Sensor dafür eingerichtet, eine Bewegung des wenigstens einen Fahrzeugs im Erfassungsbereich zu detektieren, und eine Steuereinrichtung der Leuchte ist dafür eingerichtet, aus der Bewegung des wenigstens einen Fahrzeugs auf die Wahrscheinlichkeit einer Gefahrensituation, z.B. durch abrupte Verzögerung des Fahrzeugs, zu schließen, und die bidirektionale Datenschnittstelle ist dazu eingerichtet, ein Warnsignal an Fahrzeuge im Erfassungsbereich der Leuchte zu senden und/oder die Steuereinrichtung ist dazu eingerichtet, ein optisches Warnsignal durch Ansteuern der Lichtquelle abzugeben. Beispielsweise kann die Leuchte ankommende Fahrzeuge vor einem Stauende hinter der Leuchte warnen. Ebenso kann bei einer Autobahnbeleuchtung vor Falschfahrern gewarnt werden, wenn über die Schnittstelle oder einen Detektor der Leuchte festgestellt wird, dass sich ein Fahrzeug in verkehrter Fahrtrichtung auf einer Spur befindet. Die Warnung kann über die Kommunikationsschnittstelle direkt an die Fahrzeuge gegeben werden und/oder die Leuchten können ein warnendes Blinklichtmuster abgeben.

Gemäß einer bevorzugten Ausführungsform ist die bidirektionale Datenschnittstelle dafür eingerichtet, von einem Fahrzeug Daten über dessen Geschwindigkeit und/oder Bewegungsrichtung zu erhalten, und die bidirektionale Datenschnittstelle ist dafür eingerichtet, die Daten an wenigstens ein weiteres Fahrzeug im Erfassungsbereich der Leuchte weiterzuleiten. Die Leuchte dient daher als eine Art Relaisstation zur Vermittlung der Kommunikation von Fahrzeug zu Fahrzeug. So können auf diese Weise Informationen über Verkehrssituationen von Fahrzeug zu Fahrzeug weitergeleitet werden.

Gemäß einer bevorzugten Ausführungsform ist die bidirektionale Datenschnittstelle dafür eingerichtet, Informationen eines Fahrzeugs im Erfassungsbereich der Leuchte über eine Umweltbedingung, welche das Fahrzeug mit einem fahrzeugeigenen Sensor erfasst hat, zu erhalten und die Steuereinrichtung ist dafür eingerichtet, eine Lichtfarbe und/oder eine Lichtintensität des Leuchtmittels in Abhängigkeit der vom Fahrzeug erfassten Umweltbedingungen zu verändern. In dieser Ausführungsform dient der fahrzeugeigene Sensor als verlängertes Auge für die Leuchte, um die Lichtabgabe der Leuchte den geänderten Umweltbedingungen oder besonderen Verkehrsbedingungen anzupassen.

Gemäß einer bevorzugten Ausführungsform ist die bidirektionale Datenschnittstelle als eine Bluetooth-Schnittstelle, insbesondere eine Bluetooth Low Energie, BLE,-Schnittstelle, als eine WLAN-Schnittstelle, eine UMTS-Schnittstelle, eine Mobilfunkschnittstelle und/oder als eine UHF-RFID-Schnittstelle eingerichtet. Generell sind alle drahtlosen Kommunikationsschnittstellen geeignet, welche eine Verbindung im Nahfeldbereich einer Leuchte ermöglichen.

Die Erfindung betrifft ferner auch ein Fahrzeug, welches eine Kommunikationsschnittstelle aufweist, die zur Kommunikation mit einer Straßenleuchte nach einer der vorhergehenden Ausführungsformen eingerichtet ist.

Erfindungsgemäß ist das Fahrzeug dafür eingerichtet, die Lichtverteilung von Fahrzeugscheinwerfern in Abhängigkeit einer von der Straßenleuchte empfangenen Datenkommunikation zu verändern. Wie vorhergehend ausgeführt, wird das Fahrzeug den eigenen Energieverbrauch vermindern, wenn sichergestellt ist, dass eine Straßenleuchte die Beleuchtungsaufgabe der fahrzeugeigenen Scheinwerfer für einen Streckenabschnitt übernimmt.

Weitere Vorteile und Merkmale werden aus der nachfolgenden Beschreibung bevorzugter Ausführungsformen deutlich, die in Verbindung mit den beigefügten Figuren gegeben wird. In den Figuren ist Folgendes dargestellt:
- Figur 1: zeigt eine schematische Ansicht einer Beleuchtung eines Fußgängerüberweges, welche nur in Verbindung mit den übrigen Merkmalen des Anspruchs 1 eine Ausführungsform der Erfindung bildet.
- Figur 2: zeigt eine schematische Anordnung einer Leuchte mit Wildschutzlicht, welche nur in Verbindung mit den übrigen Merkmalen des Anspruchs 1 eine Ausführungsform der Erfindung bildet.
- Figur 3(a)und (b): zeigen schematisch die Aufsichten auf einen Straßenabschnitt mit einer Straßenleuchte gemäß einer Ausführungsform der Erfindung ohne Fahrzeug bzw. mit Fahrzeug.

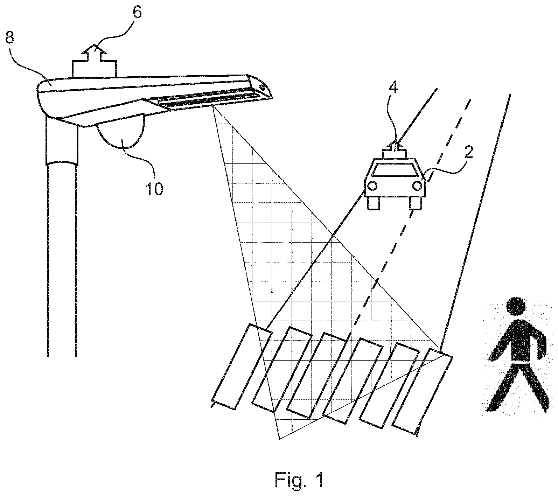

Bezugnehmend auf Figur 1 ist eine Ausführungsform der Straßenleuchte 8 dargestellt, mit einer Beleuchtungsanwendung im Bereich eines Fußgängerüberweges. Ein Fahrzeug 2 weist eine Kommunikationsschnittstelle 4 auf, die mit einer Kommunikationsschnittstelle 6 in der Straßenleuchte 8 zusammenwirkt. In der dargestellten Ausführungsform weist die Leuchte 8 ferner einen Bewegungsmelder 10 auf, der dafür eingerichtet ist, Personen im Bereich der Leuchte 8 zu detektieren. Durch die Kommunikation zwischen den Schnittstellen 4 und 6 erfährt die Leuchte von dem sich annähernden Fahrzeug. Ferner erfasst der Bewegungsmelder 10 eine Person, die sich dem Fußgängerüberweg nähert. Die Leuchte ist dazu eingerichtet, aus der Information von dem Bewegungsmelder 10 in Verbindung mit der Information über das sich annähernde Fahrzeug ein zusätzliches Licht zu erzeugen, welches den Fußgängerüberweg beleuchtet. Dies kann beispielsweise ein rotes Warnlicht oder ein ultraviolettes Licht sein, welches das leichtere Erkennen der Personen ermöglicht. Ferner ist die Leuchte 8 dafür eingerichtet, über die Schnittstelle 6 die Information über die Person am Fußgängerüberweg zur Schnittstelle 4 des Fahrzeugs 2 zu übermitteln. Im Fahrzeug kann ein Warnsignal, beispielsweise auf einem Head-up-Display, angezeigt werden, so dass der Fahrzeugführer zusätzlich eine Warnung erhält.

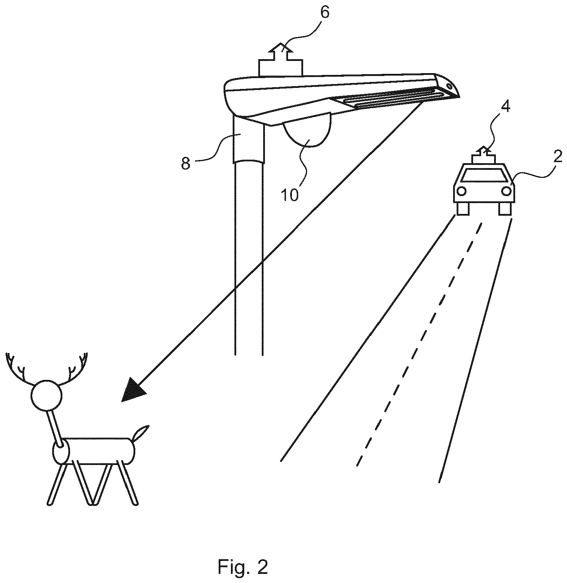

Bezugnehmend auf die Figur 2 wird eine weitere Ausführungsform der Erfindung beschrieben, wobei die sinngemäß gleichen Elemente mit den gleichen Bezugszeichen wie in der ersten Ausführungsform bezeichnet sind. Die Leuchte 8 detektiert über einen Detektor 10 Wild, welches sich in der Nähe der Leuchte im unmittelbaren Gefahrenbereich zum Überqueren der Fahrbahn aufhält. Ferner wird durch die Kommunikation über die Schnittstellen 4 und 6 in dem Fahrzeug 2 bzw. der Leuchte 8 die Information der Leuchte 8 übermittelt, dass sich das Fahrzeug 2 der Leuchte nähert. In dieser Situation sendet die Leuchte 8 ein Licht mit erhöhtem Blauanteil in den rückwärtigen Bereich der Straße in Richtung zu dem erfassten Wild, um diese davon abzuhalten, die Fahrbahn zu überqueren. Ferner wird eine Information über die drohende Gefahr von der Leuchte 8 über die Schnittstelle 6 zum Fahrzeug 2 an die Schnittstelle 4 übertragen, so dass ein entsprechender Warnhinweis auch im Fahrzeug angezeigt werden kann.

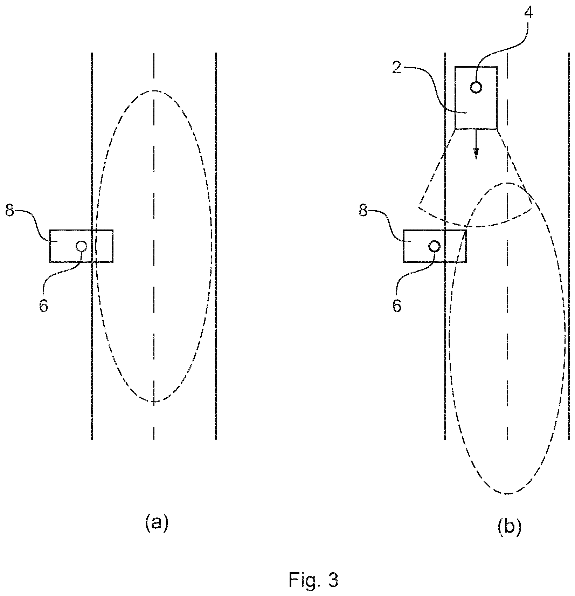

Eine dritte Ausführungsform wird in Bezug auf die Figuren 3(a) und 3(b) dargestellt. Figur 3(a) zeigt einen Fahrbahnabschnitt mit einer seitlich angeordneten Leuchte 2. Die Leuchte erzeugt eine Lichtverteilung, die schematisch mit einer gestrichelten Linie dargestellt ist. Die Figur 3(b) zeigt die Situation bei einem sich annähernden Fahrzeug 2. Das Fahrzeug selbst weist Fahrzeugscheinwerfer auf, welche eine Lichtverteilung entsprechend der gestrichelten Linie am Fahrzeug 2 erzeugt. Über die Kommunikation durch die Schnittstellen 4 und 6 erfährt die Leuchte 8 von dem sich nähernden Fahrzeug 2. Die Leuchte 8 ist dafür eingerichtet, in dieser Situation die Lichtverteilung zu verändern. Die Lichtabgabe der Leuchte in Richtung zum Fahrzeug 2 wird verringert, um den Fahrzeugführer nicht zu blenden. Ferner wird die Lichtabgabe in dem Raumwinkelbereich verstärkt, welcher entlang der Fahrzeugbewegungsrichtung weist. Dieser Anteil des Lichts unterstützt das Licht, welches vom Fahrzeugscheinwerfer selbst abgegeben wird. Daher ist die Funktionalität des Fahrzeugscheinwerfers teilweise durch die Straßenbeleuchtung ersetzt. Die Lichtabgabe durch die Fahrzeugscheinwerfer wird entsprechend reduziert. Die Wechselwirkung zwischen dem Fahrzeug und der Straßenleuchte zur Optimierung des Energieverbrauchs der fahrzeugeigenen Scheinwerfer wird erst durch die bidirektionale Kommunikation über die Schnittstellen 4 und 6 im Fahrzeug 2 bzw. der Straßenleuchte 8 ermöglicht.

Weitere Ausführungsformen der Erfindung, welche auf der bidirektionalen Kommunikation zwischen Fahrzeugen und Straßenleuchten beruhen sind im Rahmen der Erfindung möglich. Von besonderem Vorteil ist dabei, dass Fahrzeuge mit einer entsprechenden Kommunikationsschnittstelle bei installierten Straßenleuchten, welche ebenfalls eine entsprechende Kommunikationsschnittstelle aufweisen, bereits profitieren, noch bevor das System in vielen Fahrzeugen Verbreitung findet.

### BEZUGSZEICHENLISTE

- 2: Fahrzeug
- 4: Kommunikationsschnittstellen
- 6: Kommunikationsschnittstellen
- 8: Straßenleuchte
- 10: Sensor, insbesondere Bewegungsdetektor

## Patentansprüche

1. Straßenleuchte (8) mit einer Schnittstelle (6) zur drahtlosen Kommunikation mit einem Fahrzeug (2), das sich in einem Erfassungsbereich der Straßenleuchte befindet, wobei die Schnittschnelle (6) für eine bidirektionale Datenkommunikation mit dem Fahrzeug (2) eingerichtet ist, und
eine Steuereinrichtung, welche Leuchtmittel der Leuchte (8) in Abhängigkeit der bidirektionalen Kommunikation mit dem Fahrzeug (2) ansteuert,
**dadurch gekennzeichnet, dass** die Leuchte (8) dazu eingerichtet ist, einen Lichtstrom in einer Richtung, entlang derer sich ein Fahrzeug (2) bewegt, zu erhöhen und eine Information an das Fahrzeug (2) zu senden, aus der sich für das Fahrzeug (2) eine Erhöhung des Lichtstroms entlang der Bewegungsrichtung des Fahrzeuges ergibt.

2. Straßenleuchte (8) nach Anspruch 1, wobei die Leuchte (8) mit wenigstens einem Sensor (10) verbunden ist, der eingerichtet ist, um Umweltbedingungen, Präsenz von Personen und/oder Tieren, und/oder Bewegung von weiteren Fahrzeugen zu erfassen, und die Schnittstelle eingerichtet ist, um die erfassten Daten an das Fahrzeug im Erfassungsbereich der Straßenleuchte zu senden.

3. Straßenleuchte (8) nach Anspruch 2, wobei die Leuchte (8) dazu eingerichtet ist, wenigstens eine Umweltbedingung zu erfassen und die Steuereinrichtung eingerichtet ist, eine Lichtfarbe oder eine Lichtverteilung in Abhängigkeit der erfasstem Umweltbedingung zu verändern.

4. Straßenleuchte nach Anspruch 2 oder 3, wobei der Sensor (10) dafür eingerichtet ist, die Präsenz von Personen und/oder Tieren zu erfassen und die Steuereinrichtung dazu eingerichtet ist, eine Lichtverteilung und/oder eine Lichtfarbe in einem Bereich der erfassten Person und/oder des erfassten Tieres zu ändern, insbesondere einen Lichtstrom in Richtung zu der erfassten Person und/oder dem erfassten Tier zu erhöhen.

5. Straßenleuchte (8) nach Anspruch 4, wobei die Steuereinrichtung eingerichtet ist, um einen Ultraviolettanteil des Lichtstroms in Richtung zu einer erfassten Person zu erhöhen.

6. Straßenleuchte (8) nach Anspruch 4 oder 5, wobei bei der Erfassung eines Tieres die Steuereinrichtung dazu eingerichtet ist, um einen Blauanteil eines Lichtstroms in Richtung zum Tier zu erhöhen.

7. Straßenleuchte (8) nach einem der vorhergehenden Ansprüche, wobei die Steuereinrichtung dafür eingerichtet ist, einen Lichtstrom in einem Raumwinkel, aus dem sich ein Fahrzeug (2) der Straßenleuchte nähert, zu verringern.

8. Straßenleuchte (8) nach einem der vorhergehenden Ansprüche, wobei die Straßenleuchte einen Sensor aufweist, welcher dafür eingerichtet ist Information von einem im Erfassungsbereich der Leuchte befindliches Fahrzeug zu empfangen, und die Steuereinrichtung der Straßenleuchte dafür eingerichtet ist, ein Warnsignal an sich annähernde Fahrzeuge über ein ausgesandten Lichtstrom der Leuchte und/oder über die bidirektionale Datenschnittstelle zu senden auf Basis der empfangenden Informationen.

9. Straßenleuchte nach Anspruch 2 oder einem davon abhängigen Anspruch, wobei der Sensor (10) dafür eingerichtet ist, eine Bewegung des wenigstens einen Fahrzeugs (2) im Erfassungsbereich zu detektieren, und die Steuereinrichtung der Leuchte (8) dafür eingerichtet ist, aus der Bewegung des wenigstens einen Fahrzeugs auf die Wahrscheinlichkeit einer Gefahrensituation, z.B. durch abrupte Verzögerung des Fahrzeugs, zu schließen, und die bidirektionale Datenschnittstelle dazu eingerichtet ist, ein Warnsignal an Fahrzeuge im Erfassungsbereich der Leuchte (8) zu senden und/oder die Steuereinrichtung dazu eingerichtet ist, ein optisches Warnsignal durch Ansteuern der Lichtquelle abzugeben.

10. Straßenleuchte (8) nach einem der vorhergehenden Ansprüche, wobei die bidirektionale Datenschnittstelle dafür eingerichtet ist, von einem Fahrzeug (2) Daten über dessen Geschwindigkeit und/oder Bewegungsrichtung zu erhalten, und die bidirektionale Datenschnittstelle dafür eingerichtet ist, die Daten an wenigstens ein weiteres Fahrzeug im Erfassungsbereich der Leuchte weiterzuleiten.

11. Straßenleuchte (8) nach einem der vorhergehenden Ansprüche, wobei die bidirektionale Datenschnittstelle dafür eingerichtet ist, Informationen eines Fahrzeugs (2) im Erfassungsbereich der Leuchte (8) über eine Umweltbedingung, welche das Fahrzeug mit einem fahrzeugeigenen Sensor erfasst hat, zu erhalten und die Steuereinrichtung dafür eingerichtet ist, eine Lichtfarbe und/oder eine Lichtintensität des Leuchtmittels in Abhängigkeit der vom Fahrzeug erfassten Umweltbedingungen zu verändern.

12. Straßenleuchte nach einem der vorhergehenden Ansprüche, wobei die Schnittstelle (6) als eine Bluetooth-Schnittstelle, insbesondere eine Bluetooth Low Energie, BLE,-Schnittstelle, als eine WLAN-Schnittstelle, eine UMTS-Schnittstelle, eine Mobilfunkschnittstelle und/oder als eine UHF-RFID-Schnittstelle eingerichtet ist.

13. Fahrzeug (2) mit einer Kommunikationsschnittstelle (6), wobei die Kommunikationsschnittstelle zur bidirektionalen Datenkommunikation mit einer Straßenleuchte nach einem der vorhergehenden Ansprüche eingerichtet ist,**dadurch gekennzeichnet, dass** das Fahrzeug (2) dafür eingerichtet ist, die Lichtverteilung von Fahrzeugscheinwerfern in Abhängigkeit einer von der Straßenleuchte (8) empfangenen Datenkommunikation zu verändern, wobei das Fahrzeug (2) mittels der Datenkommunikation eine Information erhält, aus der sich für das Fahrzeug (2) eine Erhöhung des Lichtstroms der Straßenleuchte (8) entlang der Bewegungsrichtung des Fahrzeugs (2) ergibt, und die Lichtabgabe durch die Fahrzeugscheinwerfer entsprechend reduziert.

## Claims

1. Street light (8) having an interface (6) for wireless communication with a vehicle (2) which is located in a detection region of the street light, wherein the interface (6) is configured for bidirectional data communication with the vehicle (2), and
a control device which actuates lighting means of the light (8) depending on the bidirectional communication with the vehicle (2),
**characterised in that** the light (8) is configured to increase a luminous flux in a direction along which a vehicle (2) moves and to transmit information to the vehicle (2), from which information an increase in the luminous flux along the direction of movement of the vehicle results for the vehicle (2).

2. Street light (8) according to claim 1, wherein the light (8) is connected to at least one sensor (10) which is configured to detect environmental conditions, presence of persons and/or animals, and/or movement of further vehicles, and the interface is configured to transmit the detected data to the vehicle in the detection region of the street light.

3. Street light (8) according to claim 2, wherein the light (8) is configured to detect at least one environmental condition and the control device is configured to change a light colour or a light distribution depending on the detected environmental condition.

4. Street light according to claim 2 or 3, wherein the sensor (10) is configured to detect the presence of persons and/or animals and the control device is configured to change a light distribution and/or a light colour in a region of the detected person and/or the detected animal, in particular to increase a light flux in the direction of the detected person and/or the detected animal.

5. Street light (8) according to claim 4, wherein the control device is configured to increase an ultraviolet component of the luminous flux in the direction of a detected person.

6. Street light (8) according to claim 4 or 5, wherein, when an animal is detected, the control device is configured to increase a blue component of a luminous flux in the direction of the animal.

7. Street light (8) according to one of the preceding claims, wherein the control device is configured to reduce a luminous flux in a solid angle from which a vehicle (2) approaches the street light.

8. Street light (8) according to one of the preceding claims, wherein the street light has a sensor which is configured to receive information from a vehicle located in the detection range of the light, and the control device of the street light is configured to transmit a warning signal to approaching vehicles via an emitted luminous flux of the light and/or via the bidirectional data interface on the basis of the received information.

9. Street light according to claim 2 or a claim dependent thereon, wherein the sensor (10) is configured to detect a movement of the at least one vehicle (2) in the detection region, and the control device of the light (8) is configured to infer the probability of a hazardous situation, e.g. by abrupt deceleration of the vehicle, from the movement of the at least one vehicle, and the bidirectional data interface is configured to transmit a warning signal to vehicles in the detection region of the light (8) and/or the control device is configured to output an optical warning signal by actuating the light source.

10. Street light (8) according to one of the preceding claims, wherein the bidirectional data interface is configured to obtain data about the speed and/or direction of movement of a vehicle (2), and the bidirectional data interface is configured to forward the data to at least one further vehicle in the detection region of the light.

11. Street light (8) according to one of the preceding claims, wherein the bidirectional data interface is configured to obtain information of a vehicle (2) in the detection region of the light (8) about an environmental condition which the vehicle has detected with a vehicle-specific sensor, and the control device is configured to change a light colour and/or a light intensity of the lighting means depending on the environmental conditions detected by the vehicle.

12. Street light according to one of the preceding claims, wherein the interface (6) is configured as a Bluetooth interface, in particular a Bluetooth Low Energy, BLE, interface, as a WLAN interface, a UMTS interface, a mobile radio interface and/or as a UHF RFID interface.

13. Vehicle (2) having a communication interface (6), wherein the communication interface is configured for bidirectional data communication with a street light according to one of the preceding claims, **characterised in that** the vehicle (2) is configured to change the light distribution of vehicle headlights depending on a data communication received from the street light (8), wherein the vehicle (2) obtains information by means of the data communication, from which information an increase in the luminous flux of the street light (8) along the direction of movement of the vehicle (2) results for the vehicle (2), and correspondingly reduces the light emission by the vehicle headlights.

## Revendications

1. Réverbère (8) avec une interface (6) pour la communication sans fil avec un véhicule (2), qui se trouve dans la zone de détection du réverbère, dans lequel l'interface (6) est conçue pour une communication de données bidirectionnelle avec le véhicule (2) et
un dispositif de commande, qui contrôle des moyens d'éclairage du réverbère (8) en fonction de la communication bidirectionnelle avec le véhicule (2),
**caractérisé en ce que** le réverbère (8) est conçu pour augmenter un flux lumineux dans une direction le long de laquelle un véhicule (2) se déplace, et pour envoyer au véhicule (2) une information à partir de laquelle il résulte, pour le véhicule (2), une augmentation du flux lumineux le long de la direction de déplacement du véhicule.

2. Réverbère (8) selon la revendication 1, dans lequel le réverbère (8) est relié avec au moins un capteur (10) qui est conçu pour détecter les conditions environnementales, la présence de personnes et/ou d'animaux et/ou le déplacement d'autres véhicules, et l'interface est conçue pour envoyer les données détectées au véhicule dans la zone de détection du réverbère.

3. Réverbère (8) selon la revendication 2, dans lequel le réverbère (8) est conçu pour détecter au moins une condition environnementale et le dispositif de commande est conçu pour modifier une couleur de lumière ou une répartition de la lumière en fonction de la condition environnementale détectée.

4. Réverbère (8) selon la revendication 2 ou 3, dans lequel le capteur (10) est conçu pour détecter la présence de personnes et/ou d'animaux et le dispositif de commande est conçu pour modifier une répartition de la lumière et/ou une couleur de la lumière au niveau de la personne détectée et/ou de l'animal détecté, plus particulièrement pour augmenter un flux lumineux en direction de la personne détectée et/ou de l'animal détecté.

5. Réverbère (8) selon la revendication 4, dans lequel le dispositif de commande est conçu pour augmenter une part d'ultraviolet du flux lumineux en direction d'une personne détectée.

6. Réverbère (8) selon la revendication 4 ou 5, dans lequel, lors de la détection d'un animal, le dispositif de commande est conçu pour augmenter une part de couleur bleue d'un flux lumineux en direction de l'animal.

7. Réverbère (8) selon l'une des revendications précédentes, dans lequel le dispositif de commande est conçu pour réduire un flux lumineux dans un angle spatial à partir duquel un véhicule (2) s'approche du réverbère.

8. Réverbère (8) selon l'une des revendications précédentes, dans lequel le réverbère comprend un capteur qui est conçu pour recevoir des informations provenant d'un véhicule se trouvant dans la zone de détection du réverbère et le dispositif de commande du réverbère est conçu pour envoyer un signal d'avertissement au véhicule en approche par l'intermédiaire d'un flux lumineux émis par le réverbère et/ou par l'intermédiaire de l'interface de données bidirectionnelle sur la base des informations reçues.

9. Réverbère selon la revendication 2 ou une revendication dépendant de celle-ci, dans lequel le capteur (10) est conçu pour détecter un déplacement de l'au moins un véhicule (2) dans la zone de détection et le dispositif de commande du réverbère (8) est conçu pour déterminer, à partir du déplacement de l'au moins un véhicule, la probabilité d'une situation dangereuse, par exemple du fait d'un freinage brusque du véhicule et l'interface de données bidirectionnelle est conçue pour envoyer un signal d'avertissement aux véhicules dans la zone de détection du réverbère (8) et/ou le dispositif de commande est conçu pour générer un signal d'avertissement optique par le contrôle de la source de lumière.

10. Réverbère (8) selon l'une des revendications précédentes, dans lequel l'interface de données bidirectionnelle est conçue pour obtenir d'un véhicule (2) des données concernant sa vitesse et/ou sa direction de déplacement et l'interface de données bidirectionnelle est conçue pour transmettre les données à au moins un autre véhicule dans la zone de détection du réverbère.

11. Réverbère (8) selon l'une des revendications précédentes, dans lequel l'interface de données bidirectionnelle est conçue pour obtenir des informations d'un véhicule (2) dans la zone de détection du réverbère (8) concernant une condition environnementale que le véhicule a détecté avec un capteur propre au véhicule et le dispositif de commande est conçu pour modifier une couleur de lumière et/ou une intensité de lumière du moyen d'éclairage en fonction des conditions environnementales détectées par le véhicule.

12. Réverbère (8) selon l'une des revendications précédentes, dans lequel l'interface (6) est conçue comme une interface Bluetooth, plus particulièrement une interface Bluetooth Low Energy BLE, comme une interface WLAN, une interface UMTS, une interface de téléphonie mobile et/ou une interface UHF-RFID.

13. Véhicule (2) avec une interface de communication (6), dans lequel l'interface de communication est conçue pour la communication bidirectionnelle avec un réverbère selon l'une des revendications précédentes, **caractérisé en ce que** le véhicule (2) est conçu pour modifier la répartition de la lumière des phares du véhicule en fonction d'une communication de données reçue par le réverbère (8), dans lequel le véhicule (2) obtient, à l'aide de la communication de données, une information à partir de laquelle il résulte, pour le véhicule (2), une augmentation du flux lumineux du réverbère (8) le long de la direction de déplacement du véhicule (2) et l'émission de lumière par les phares du véhicule est réduite en conséquence.
